# EUROPEAN PATENT APPLICATION

(11) **EP 2 851 396 A1**
(43) Date of publication of application: **25.03.2015**
(21) Application number: 13789975.3
(22) Date of filing: 13.05.2013
(51) Int. Cl.: C08L 93/04, B23K 35/363, B23K 35/26

(54) **BASE RESIN FOR SOLDERING FLUX, SOLDERING FLUX AND SOLDER PASTE**

(30) Priority: 18.05.2012 JP 2012114904
(71) Applicant: Arakawa Chemical Industries, Ltd., Osaka-shi Osaka 541-0046 (JP)
(72) Inventor: FUNAKOSHI, Yasushi, Osaka-shi Osaka 538-0053 (JP); NAKATANI, Takashi, Osaka-shi Osaka 538-0053 (JP); YOSHIMOTO, Tetsuya, Osaka-shi Osaka 541-0046 (JP)
(74) Representative: Vossius & Partner
(86) International application number: PCT/JP2013/063274
(87) International publication number: WO 2013/172295

(57) **Abstract**

The object of the present invention is to provide a soldering-flux-oriented novel base resin that enhances the fluidity of a soldering flux and both the visco-stability and adhesion of a solder paste, while improving the color tone and anti-crack property of the flux residue. The present invention is directed to a base resin for a soldering flux, the base resin comprising a rosin (A) containing at least 15 wt% of a pimarane-type resin acid (a-1), at least 1 wt% of a labdane-type resin acid (a-2), and at least 50 wt% of an abietane-type resin acid that has no conjugated double bond (a-3).

## Description

### Technical Field

The present invention relates to a base resin for a soldering flux, a soldering flux, and a solder paste.

### Background Art

Surface mounting on a circuit board typically involves the following procedure. A solder paste, which is a mixture of a flux and a solder powder, is supplied to electrodes on a circuit board by using a technique, such as screen printing and extrusion from a dispenser, and electronic components, such as capacitors, are subsequently mounted on the circuit board. The circuit board is then heated in a reflow oven to fuse the solder powder, thereby joining the electronic components and the electrodes.

Natural rosin has been widely used as a base resin for flux. However, natural rosin is highly susceptible to oxidation due to the presence of a significant amount of abietane-type resin acids (e.g., abietic acid, levopimaric acid, and palustric acid), which contain a conjugated double bond intramolecularly, and therefore natural rosin exhibits less thermal stability (e.g., easily discolored when heated). Thus, the use of natural rosin as a base resin for flux sometimes makes it difficult to conduct downstream inspection and cleaning procedures because the resulting flux residue at the soldered joints becomes dark-colored, and migration is induced due to the cracks formed in the residue. These problems become more serious when using a lead-free solder powder, which has a high melting point.

In order to solve these problems with regard to flux residue, Patent Documents 1 to 3, for example, propose the use of, instead of natural rosin, a rosin (disproportionated rosin or hydrogenated rosin) whose content of abietan-type resin acids having a conjugated double bond is reduced to an amount of not more than 30 wt%, as a base resin. However, fluxes containing the rosin tend to exhibit impaired fluidity over time. Further, it has been revealed that solder pastes containing the fluxes are likely to become increasingly viscous, and easily lose their adhesion over time; i.e., the force to hold electronic components in a reflow oven is easily lost.

### Citation List

### Patent Documents

Patent Document 1: JPH06-246482A
Patent Document 2: JP2008-062239A
Patent Document 3: JP2011-173173A

### Summary of Invention

### Technical Problem

An object of the present invention is to provide a soldering-flux-oriented novel base resin that enhances the fluidity of a soldering flux and both the visco-stability and adhesion of a solder paste, while improving the color tone and anti-crack property of the flux residue.

### Solution to Problem

The present inventors conducted extensive research to achieve the above object, and accordingly found that a rosin containing specific resin acids in a specific proportion serves as a base resin that can achieve the object.

Specifically, the present invention relates to the following base resin for a soldering flux, the soldering flux, the solder paste, and the postflux.
Item 1. A base resin for a soldering flux, the base resin comprising a rosin (A) containing: at least 15 wt% of a pimarane-type resin acid (a-1); at least 1 wt% of a labdane-type resin acid (a-2); and at least 50 wt% of an abietane-type resin acid that has no conjugated double bond (a-3).
Item 2. The base resin for a soldering flux according to Item 1 wherein the component (A) has a Gardner color of 2 or less.
Item 3. A soldering flux comprising the base resin for a soldering flux according to Item 1 or 2, a flux solvent (B), and optionally an activator (C).
Item 4. The soldering flux according to Item 3 further comprising a thixotropic agent (D).
Item 5. A solder paste comprising the soldering flux according to Item 4 and a solder powder.
Item 6. A postflux comprising the soldering flux according to Item 3.

### Advantageous Effects of Invention

The base resin according to the present invention enhances the fluidity of a soldering flux and both the visco-stability and adhesion of a solder paste. Further, the base resin excels in thermal stability, and improves the color tone and anti-crack property of the flux residue.

The soldering flux according to the present invention maintains its fluidity even after being stored at room temperature for a long period of time; thus, the solder paste becomes excellent in its visco-stability, adhesion, and soldering properties (wettability). Further, because the color tone of the flux residue left after soldering is excellent, the inspection procedure, for example, becomes easy and the cleaning procedure may be omitted. Moreover, because the flux is less crackable, problems associated with the electrical reliability of circuits, such as migration caused by water adhesion, are less likely to arise.

In addition, the solder paste according to the present invention is not only excellent in visco-stability over time and thus well-suited to long-term storage, but also excellent in adhesion. What is more, there is little change in visco-stability over time. The soldering properties (wettability) are also excellent, as are the color tone and crack resistance of the flux residue generated after soldering.

The rosin (A) according to the present invention is useful not only as a base resin for fluxes for solder pastes but also as a base resin for prefluxes, postfluxes (fluxes for dip soldering), and fluxes for rosin-containing solders, thread solders, and like solders. In particular, postfluxes containing the base resin according to the present invention have excellent stability over time and soldering properties. The color tone of the flux residue generated after soldering is also excellent.

### Description of Embodiments

The base resin for a soldering flux according to the present invention comprises a rosin (A) (hereinafter, referred to as "component (A)") containing at least 15 wt% of a pimarane-type resin acid (a-1) (hereinafter, referred to as "component (a-1)"), at least 1 wt% of a labdane-type resin acid (a-2) "(hereinafter, referred to as component (a-2)"), and at least 50 wt% of an abietane-type resin acid that has no conjugated double bond (a-3) "(hereinafter, referred to as component (a-3)").

A pimarane-type resin acid, i.e., component (a-1), refers to a resin acid that has a pimarane skeleton or an isopimarane skeleton, and specifically refers to a resin acid represented by the following formula (1) 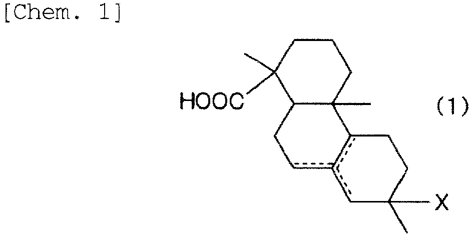 wherein X represents -CH₂CH₃ or -CH=CH₂; and the dotted lines indicate that one of the bonds shown with the dotted lines may be a carbon-to-carbon double bond.

Examples of resin acids represented by formula (1) include pimaric acid, isopimaric acid, sandaracopimaric acid, and hydrogenated products thereof. Component (A) may contain a mixture of two or more such acids and hydrogenated products.

The labdane-type resin acid, i.e., component (a-2), refers to a resin acid that has a labdane skeleton, and specifically refers to a resin acid represented by the following formula (2) 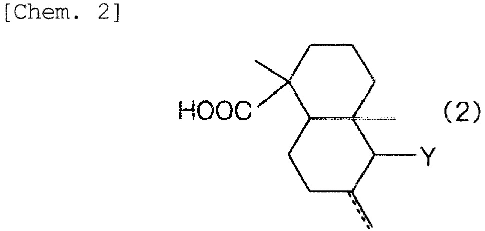 wherein Y represents -CH₂CH=C(CH₃)-CH=CH₂, -CH₂CH₂-CH(CH₃)-CH=CH₂, -CH₂CH₂-CH (CH₃)-CH₂-CH₃, -CH₂CH=C(CH₃)-CH₂-CH₃, -CH₂CH₂-CH(CH₃)-CH₂-COOH, or -CH₂CH₂-C(CH₃)=CH-COOH. The dotted line indicates that the bond shown with the dotted line may be a carbon-to-carbon double bond.

Examples of resin acids represented by formula (2) include communic acid-derived resin acids, and agathic acid-derived resin acids. Examples of communic acid-derived resin acids include cis-communic acids, trans-communic acids, *mirceo-*communic acids, and hydrogenated products thereof. Examples of agathic acid-derived resin acids include agathic acids, dihydroagathic acids, and hydrogenated products thereof. Component (A) may contain a mixture of two or more such acids and hydrogenated products.

Component (a-3) refers to an abietane-type resin acid that has an abietane skeleton with no conjugated double bond intramolecularly. Examples of component (a-3) include dehydroabietic acid, dihydroabietic acid, and tetrahydroabietic acid. Component (A) may contain a mixture of two or more such acids.

Component (A) contains component (a-1) in an amount of at least 15 wt%, with about 15 to 25 wt% being preferable; component (A) contains component (a-2) in an amount of at least 1 wt%, with about 1 to 10 wt% being preferable; and component (A) contains component (a-3) in an amount of at least 50 wt%, with about 65 to 84 wt% being preferable. When component (A) contains each component in an amount below these numerical ranges, it may become difficult to bring about the advantageous effect of the present invention. Component (A) may contain one or more other resin acids in addition to components (a-1) to (a-3), and if it does so, component (A) contains the one or more other resin acids typically in an amount of less than 5 wt%. Component (A) preferably consists of only components (a-1) to (a-3).

Components (a-1) to (a-3) and other resin acids contained in component (A) can be quantified by various known analytical methods, such as gas chromatography.

The production method of component (A) is not particularly limited, and various known methods can be used. Specific examples include the following methods 1 to 3 described below.
1. A method comprising: purifying a starting material rosin (e.g., gum rosin, wood rosin, tall oil rosin); and subjecting the purified product to a hydrogenation reaction and/or a disproportionation reaction to thereby produce component (A) containing a predetermined amount of components (a-1) to (a-3). In this method, it is preferable to use as a starting material rosin a rosin that contains some quantity of components (a-1) and (a-2), and such a rosin can be identified with reference to academic documents known at the time the present application was filed.
2. A method comprising: purifying a starting material rosin; subjecting the purified product to a hydrogenation reaction and/or a disproportionation reaction to thereby prepare a rosin containing a predetermined amount of component (a-3); and adding to the resulting rosin a predetermined amount of components (a-1) and (a-2), which are separately obtained or prepared through a known method, to thereby produce component (A). The starting material rosin may contain components (a-1) and (a-2) in advance.
3. A method comprising: mixing components (a-1) to (a-3), which are separately obtained or prepared through a known method, to thereby produce component (A).
4. A method comprising: adding components (a-1) to (a-3), which are separately obtained or prepared through a known method, to a starting material rosin; and mixing them to thereby produce component (A).

Commercially available products can be used as component (a-1), and component (a-1) can also be prepared through a method disclosed, for example, in J. Am. Chem. Soc. 70, 2079 (1948), J. Org. Chem. 23, 25-26 (1958), Can. J. Chem. 38 663-667 (1960).

Commercially available products can be used as component (a-2), and component (a-2) can also be prepared through a method disclosed, for example, in J. Am. Chem. Soc., 77, 2823 (1955), Weissman Holzforshung 28, 186-188 (1974), or JPS51-131899A.

Commercially available products can be used as component (a-3), and component (a-3) can also be prepared through a method disclosed, for example, in J. Org. Chem. 31, 4246-4248 (1966), J. Org. Chem. 31, 4128 (1966), J. Org. Chem. 34, 1550 (1969), or JPS51-149256A.

In the aforementioned purification step, various known techniques, such as distillation, extraction, and recrystallization, can be employed. Distillation, for example, can typically be performed at a temperature of about 200 to 300°C under reduced pressure of about 0.01 to 3 kPa. In extraction, an alkaline aqueous solution of a starting material rosin is prepared, and the insoluble unsaponified product is extracted with any of various organic solvents, followed by neutralization of the aqueous layer. Examples of recrystallization include a technique in which a starting material rosin is dissolved in an organic solvent, i.e., a good solvent, and the solvent is distilled off to give a thick solution, followed by addition of an organic solvent, i.e., a poor solvent.

The aforementioned hydrogenation reaction can be carried out by various known methods. Specifically, a starting material rosin is subjected to a hydrogenation reaction in the presence of a hydrogenation catalyst. The reaction temperature is typically about 100 to 300°C, the hydrogen pressure is typically about 1 to 25 MPa, and the reaction time is typically about 1 to 10 hours. Examples of hydrogenation catalysts include: supported catalysts configured such that palladium, rhodium, ruthenium, platinum, and/or the like is carried on carbon, alumina, silica, silica alumina, zeolite, or the like; metal powders of nickel, platinum, or the like; and iodine and iodinated products such as iron iodides. The hydrogenation catalyst is used in an amount of typically about 0.01 to 10 wt% based on the amount of the starting material rosin.

The aforementioned disproportionation reaction can be carried out by using various known methods. Specifically, a starting material rosin is subjected to a disproportionation reaction in the presence of a disproportionation catalyst. The reaction temperature is typically about 100 to 300°C, and the reaction pressure is typically ordinary pressure, or less than 1 MPa. The aforementioned examples of hydrogenation catalysts can also be used as a disproportionation catalyst, and the disproportionation catalyst is used in an amount of typically about 0.01 to 10 wt% based on the amount of the starting material rosin.

The color tone of component (A) is not particularly limited, but the Gardner color thereof is preferably 2 or less, taking into consideration the over-time stability of the flux and solder paste, the color tone (transparency) of flux residue, and the like.

Component (A) is not particularly limited in terms of other physical properties, but the acid value (JIS K 5902), for example, is typically about 150 to 190 mgKOH/g, and the softening point (JIS K 5902) is typically about 70 to 90°C.

The flux according to the present invention is a composition containing a base resin according to the present invention (component (A)), a flux solvent (B) (hereinafter, referred to as component (B)), and optionally an activator (C) (hereinafter, referred to as component (C)).

For component (B), various known substances can be used without any particular restriction. Specific examples include ether alcohols, such as diethylene glycol monohexyl ether, diethylene glycol monobutyl ether, ethylene glycol monohexyl ether, and ethylene glycol monoethylhexyl ether; non-ether alcohols, such as 2-propanol, octanediol, benzyl alcohol, 1,3-butanediol, 1,4-butanediol, 2-(2-n-butoxyethoxy)ethanol, and terpineol; esters, such as isopropyl acetate, ethyl propionate, butyl benzoate, and diethyl adipate; hydrocarbons, such as *n-*hexane, dodecane, and tetradecene; and pyrrolidones, such as N-methyl-2-pyrrolidone. Among these substances, when using the flux for preparing a solder paste, the above ether alcohols having a high boiling point are preferable, taking into consideration the reflow temperature (typically 230 to 260°C), and ether alcohols having a boiling point of about 230 to 260°C are particularly preferable. When using the flux as a postflux, non-ether alcohols are preferable.

Examples of component (C) include monocarboxylic acids, such as palmitic acid, stearic acid, benzoic acid, and picolinic acid; dicarboxylic acids, such as succinic acid, adipic acid, glutaric acid, azelaic acid, sebacic acid, dodecanedioic acid, and dimer acid; bromodiols, such as 1-bromo-2-butanol, 1-bromo-2-propanol, 3-bromo-1-propanol, 3-bromo-1,2-propanediol, 1,4-dibromo-2-butanol, 1,3-dibromo-2-propanol, 2,3-dibromo-1-propanol, 1,4-dibromo-2,3-butanediol, 2,3-dibromo-1,4-butenediol, 2,3-dibromo-2-butene-1,4-diol, and 2,2-bis(bromomethyl)-1,3-propanediol; hydrohalogenic acid salts of organic amines, such as ethylamine hydrobromide, diethylamine hydrobromide, and methylamine hydrobromide; bromoalkanes, such as 1,2,3,4-tetrabromobutane, and 1,2-dibromo-1-phenylethane; bromoalkenes, such as 1-bromo-3-methyl-1-butene, 1,4-dibromobutene, 1-bromo-1-propene, 2,3-dibromopropene, and 1,2-dibromostyrene; benzyl bromides, such as 4-stearoyloxybenzyl bromide, 4-stearyloxybenzyl bromide, 4-stearylbenzyl bromide, 4-bromomethylbenzyl stearate, 4-stearoylaminobenzyl bromide, 2,4-bisbromomethylbenzyl stearate, 4-palmitoyloxybenzyl bromide, 4-myristoyloxybenzyl bromide, 4-lauroyloxybenzyl bromide, and 4-undecanoyloxybenzyl bromide; polyamines, such as N,N'-bis(4-aminobutyl)-1,2-ethanediamine, triethylenetetramine, N,N'-(3-aminopropyl)ethylenediamine, and N,N'-bis(3-aminopropyl)piperazine; and chlorine-containing activators, such as diethylamine hydrochloride. These substances may be used singly or in combination of two or more.

The flux according to the present invention may further optionally comprise a thixotropic agent (D) (hereinafter, referred to as "component (D)"), a base resin (E) other than component (A) (hereinafter, referred to as "component (E)"), or an additive (hereinafter, referred to as "component (F)").

When using the flux according to the present invention to prepare a solder paste, component (D) is preferably used for the purpose of adjusting the suitability for screen printing. Specific examples of component (D) include: thixotropic agents of animal or vegetable origin, such as castor oil, hydrogenated castor oil, bees wax, and carnauba wax; and amide-based thixotropic agents, such as stearamide, and 12-hydroxystearic acid ethylenebisamide. These substances may be used singly or in combination of two or more.

Examples of component (E) include: rosin-based resins other than component (A), such as the aforementioned starting material rosins, purified products thereof (purified rosins), disproportionated rosins made from these rosins, hydrogenated rosins made from these rosins, formylated rosins made from these rosins; and polymerized rosins made from these rosins; and synthetic resins, such as epoxy resins, acrylic resins, polyimide resins, polyamide resins (nylon resins), polyester resins, polyacrylonitrile resins, vinyl chloride resins, polyvinyl acetate resins, polyolefin resins, fluorine-based resins, and ABS resins.

Examples of component (F) include additives, such as antioxidants, antifungal agents, and delusterants.

The amount of each component to be contained in the flux is suitably determined in accordance with the utility form of the flux. The amount of each component of the flux used for preparing a solder paste is, for example, as follows: Component (A): about 20 to 60 wt%, preferably 30 to 60 wt% Component (B): about 60 to 20 wt%, preferably 55 to 30 wt% Component (C): about 0 to 20 wt%, preferably 1 to 10 wt% Component (D): about 0 to 20 wt%, preferably 1 to 10 wt% Component (E) : about 0 to 20 wt%, preferably 0 to 10 wt% Component (F): about 0 to 10 wt%, preferably 1 to 5 wt%

The amount of each component of the flux used for preparing a postflux is, for example, as follows: Component (A): about 20 to 60 wt%, preferably 25 to 50 wt% Component (B): about 80 to 40 wt%, preferably 70 to 45 wt% Component (C): about 0 to 10 wt%, preferably 1 to 5 wt% Component (E): about 0 to 10 wt%, preferably 0 to 5 wt% Component (F): about 0 to 10 wt%, preferably 1 to 5 wt%

The flux according to the present invention can be used without any treatment, or diluted with a solvent, such as isopropyl alcohol and benzyl alcohol, for use as a postflux or dip soldering flux. Moreover, the flux can be mixed with any of various lead-free solder alloy powders for use as a lead-free solder paste, and also used for various thread solders.

The solder paste according to the present invention comprises the flux according to the present invention and a solder powder. The amount of each component is not particularly limited, but the flux is contained typically in an amount of about 5 to 20 wt%, and the solder powder is contained typically in an amount of about 80 to 95 wt%. The solder paste can be prepared in accordance with various known procedures (e.g., planetary mill).

Examples of solder powders include: conventionally used lead eutectic solder powders, such as Sn-Pb-based solder powders; and lead-free solder powders, such as Sn solder powders, Sn-Ag-based solder powders, Sn-Cu-based solder powders, Sn-Zn-based solder powders, Sn-Sb-based solder powders, Sn-Ag-Cu-based solder powders, Sn-Ag-Bi-based solder powders, Sn-Ag-Cu-Bi-based solder powders, Sn-Ag-Cu-In-based solder powders, Sn-Ag-Cu-S-based solder powders, and Sn-Ag-Cu-Ni-Ge-based solder powders. The solder powders typically have, but are not particularly limited to, an average primary particle diameter of about 1 to 50 µm, with about 20 to 40 µm being preferable.

### Examples

Hereinafter, Examples and Comparative Examples describe the present invention in detail. However, the scope of the present invention is, needless to say, not limited to the Examples. The symbols "parts" and "%" are based on weight.

The compositional ratios of resin acids shown in Tables 1 and 2 were determined by measurement using a commercially available gas chromatograph mass spectrometer (manufactured by Agilent Technologies, trade name "Agilent 6890" and "Agilent 5973N"). A commercially available column (manufactured by Shinwa Chemical Industries Ltd., trade name "Advance-DS") was used.

### Preparation of Rosin (A)

### Production Example 1

185 g of Argentine gum rosin (indicated as "Starting Material 1" in Table 1; Table 1 shows the starting materials of the following Examples in the same manner) was placed in a reduced-pressure distillation vessel, and distilled at a reduced pressure of 0.4 kPa in a nitrogen atmosphere, thereby giving a purified rosin. Subsequently, 150 g of the purified rosin and 0.7 g of 5% palladium on carbon (water content: 50%) were placed in a 0.3-L rotary autoclave, and the oxygen in the system was removed, followed by pressurization to 10 MPa with hydrogen. The temperature was raised to 220°C, and at the same temperature a hydrogenation reaction was carried out for 3 hours, thereby giving rosin (A1). Table 1 shows the compositional ratios of the resin acids contained in the starting material rosin (Starting Material 1) and Table 2 shows the compositional ratios of the resin acids contained in rosin (A1) and the physical properties of rosin (A1) (Tables 1 and 2 also show the compositional ratios of the resin acids contained in the starting material rosins and the compositional ratios and physical properties of the obtained rosins of the following Examples).

### Production Example 2

The procedure described in Production Example 1 was repeated except that Indonesian gum rosin (Starting Material 2) was used as a starting material rosin, thereby giving rosin (A2).

### Production Example 3

The procedure described in Production Example 1 was repeated except that gum rosin from the Guangxi Province of China (Starting Material 3) was used as a starting material rosin, thereby giving rosin (A3).

### Production Example 4

The procedure described in Production Example 1 was repeated except that a 1:1 mixture (ratio by weight) of Argentine gum rosin, which was the same as that used in Production Example 1 (Starting Material 1), and gum rosin from the Yunnan Province of China (Starting Material 4) was used as a starting material rosin, thereby giving rosin (A4).

### Production Example 5

250 g of Argentine gum rosin, which was the same as that used in Production Example 1 (Starting Material 1), was placed in a reduced-pressure distillation vessel, and distilled at a reduced pressure of 0.4 kPa in a nitrogen atmosphere, thereby giving a purified rosin. Subsequently, 200 g of the purified rosin and 0.4 g of 5% palladium on carbon (water content: 50%) were placed in a 0.5-L flask, and the temperature was raised to 260°C in a nitrogen atmosphere. At the same temperature, a disproportionation reaction was carried out for 3 hours, thereby giving rosin (A5).

### Comparative Production Example 1

The procedure described in Production Example 1 was repeated except that gum rosin from the Yunnan Province of China, which was the same as that used in Production Example 4 (Starting Material 4), was used as a starting material rosin, thereby giving rosin (P1).

### Comparative Production Example 2

Argentine gum rosin, which was the same as that used in Production Example 1 (Starting Material 1), was placed in a reduced-pressure distillation vessel, and distilled at a reduced pressure of 0.4 kPa in a nitrogen atmosphere, thereby giving rosin (P2).

### Comparative Production Example 3

250 g of gum rosin from the Yunnan Province of China, which was the same as that used in Production Example 4 (Starting Material 4), was placed in a reduced-pressure distillation vessel, and distilled at a reduced pressure of 0.4 kPa in a nitrogen atmosphere, thereby giving a purified rosin. 200 g of the resulting purified rosin and 0.08 g of 3.5% palladium on carbon (water content: 50%) were placed in a 0.5-L flask, and the temperature was raised to 280°C in a nitrogen atmosphere. At the same temperature, a disproportionation reaction was carried out for 3 hours, thereby giving rosin (P3).

### Comparative Production Example 4

250 g of a commercially available, Chinese hydrogenerated rosin (manufactured by Arakawa Chemical Industries, Ltd., trade name "Hypale CH," Starting Material 5) was placed in a reduced-pressure distillation vessel, and distilled at a reduced pressure of 0.4 kPa in a nitrogen atmosphere, thereby giving a purified hydrogenerated rosin. 200 g of the resulting purified hydrogenerated rosin and 0.06 g of 5% palladium on carbon (water content: 50%) were placed in a 0.5-L flask, and the temperature was raised to 260°C in a nitrogen atmosphere. At the same temperature, a disproportionation reaction was carried out for 1 hour, thereby giving rosin (P4).

### Examples 1 to 5 and Comparative Examples 1 to 4

### Production of Flux for Solder Paste and Solder Paste

50 parts of component (A1) obtained in Production Example 1, 5 parts of 12-hydroxystearic acid ethylenebisamide, and 45 parts of diethylene glycol monohexyl ether were placed in a beaker, and heated while stirring to melt them, thereby preparing a flux for solder paste. Subsequently, 10 parts of the flux was mixed with 90 parts of a lead-free solder powder (Sn-Ag-Cu alloy; 96.5 wt%/3 wt%/0.5 wt%; average particle diameter: 25 to 38 µm) while stirring, thereby preparing a solder paste. The same procedure was repeated using the rosins obtained in Production Examples 2 to 5 and Comparative Production Examples 1 to 4 to prepare fluxes for solder paste and solder pastes.

### Comparative Example 5

The procedure described in Example 1 was repeated except that Hypale CH (Starting Material 5, indicated as (P5) in Table 3) was used in place of component (A1), thereby preparing a flux for solder paste and a solder paste.

### Test on Flux for Solder Paste

### Stability over Time

The fluxes for solder paste prepared in Examples 1 to 5 and Comparative Examples 1 to 5 were stored at room temperature for 1 month, and evaluated for their fluidity in accordance with the following criteria. Table 3 shows the results.
1: Flowing at room temperature
2: Not flowing at room temperature, but soft and easy to stir
3: Solid at room temperature and difficult to stir

### Test on Solder Paste

### Stability over Time

The solder pastes prepared in Examples 1 to 5 and Comparative Examples 1 to 5 were stored at a temperature of 40°C for 7 days. Thereafter, the viscosity was measured with a PCU-205 automatic viscometer (manufactured by Malcolm Co., Ltd.), and the change in viscosity from the point at which the pastes were prepared (day 0) was examined. The smaller the change in viscosity, the better the stability over time. Table 3 shows the results.
1. Viscosity change: less than 20 Pa·S
2. Viscosity change: 20 Pa·S or more and less than 40 Pa·S
3. Viscosity change: 40 Pa·S or more

### Adhesion

The solder pastes prepared in Examples 1 to 5 and Comparative Examples 1 to 5 were individually printed on a copper plate, and the adhesion was measured by a TK-1 tackiness tester (manufactured by Malcom Co., Ltd.). The larger the value, the better the adhesion. Table 3 shows the results.
1: Observed value: 80 gf or more
2: Observed value: 30 gf or more to less than 80 gf
3: Observed value: less than 30 gf

### Soldering Properties

The solder pastes prepared in Examples 1 to 5 and Comparative Examples 1 to 5 were evaluated for soldering properties (wettability) in accordance with JIS Z3284, Appendix 10, regarding a wettability and dewetting test. All of the solder pastes showed excellent soldering properties (spreading scale 1 or 2; the results are not shown in Table 3).

### Color Tone of Flux Residue

The solder pastes prepared in Examples 1 to 5 and Comparative Examples 1 to 5 were individually printed on a copper substrate, and the soldered portions were observed with a VW-6000 microscope (manufactured by Keyence Corporation: 30x power) to determine the color tone of the flux residues in accordance with the following criteria.
1: Clear and colorless
2: Slightly colored
3: Colored

### Cracks in Flux Residue

Together with the color tone evaluation of the flux residues, the presence of cracks was also examined. None of the solder pastes prepared in Examples 1 to 5 and Comparative Examples 1 to 5 had cracks (the results are not shown in Table 3).

### Examples 6 to 10 and Comparative Examples 6 to 9

### Production of Postflux

50 parts of component (A1) obtained in Production Example 1 and 50 parts of isopropyl alcohol were placed in a beaker, and heated while stirring to melt them, thereby preparing a postflux. The same procedure was repeated using the rosins obtained in Production Examples 2 to 5 and Comparative Production Examples 1 to 4, thereby preparing postfluxes.

### Comparative Example 10

The procedure described in Example 6 was repeated except that Hypale CH (Starting Material 5, indicated as (P5) in Table 4) was used in place of component (A1), thereby preparing a postflux.

### Test on Postflux

### Stability over Time

The postfluxes prepared in Examples 6 to 10 and Comparative Examples 6 to 10 were stored at room temperature for one week, and evaluated for precipitate formation in accordance with the following criteria. The less the precipitate, the better the stability over time. Table 4 shows the results.
1. No precipitate was formed
2. A small amount of precipitate was formed
3. A significant amount of precipitate was formed

### Soldering Properties

The postfluxes prepared in Examples 6 to 10 and Comparative Examples 6 to 10 were evaluated for soldering properties (wettability) in accordance with JIS Z3197 regarding a solder spreading method, and the spread factor was calculated. The larger the value, the better the soldering properties. Table 4 shows the results.
1. Spreading factor: 65% or more
2. Spreading factor: less than 65%

### Color Tone of Flux Residue

The soldered portions were observed with a VW-6000 microscope (manufactured by Keyence Corporation: 30x power) to determine the color tone of the flux residues in accordance with the following criteria.
1. Clear and colorless
2. Slightly colored
3. Colored

**Table 1**

| Starting Material Rosin | | Starting Material 1 | Starting Material 2 | Starting Material 3 | Starting Material 4 | Starting Material 5 |
|---|---|---|---|---|---|---|
| Component (a-1) | | 23% | 21% | 18% | 9% | 11% |
| Component (a-2) | Communic Acid-derived Resin Acid | 3% | 0% | 3% | 0% | 0% |
| | Agathic Acid-derived Resin Acid | 0% | 9% | 0% | 0% | 0% |
| Component (a-3) | Dihydroabietic Acid | 5% | 2% | 3% | 3% | 10% |
| | Dihydroabietic Acid | 0% | 0% | 0% | 0% | 61% |
| | Tetrahydroabietic Acid | 0% | 0% | 0% | 0% | 18% |
| Other Resin Acid | | 69% | 68% | 76% | 88% | 0% |

**Table 2**

| | | | Production Example 1 | Production Example 2 | Production Example 3 | Production Example 4 | Production Example 5 | Comp. Production Example 1 | Comp. Production Example 2 | Comp. Production Example 3 | Comp. Production Example 4 |
|---|---|---|---|---|---|---|---|---|---|---|---|
| Obtained Rosin | | | (A1) | (A2) | (A3) | (A4) | (A5) | (P1) | (P2) | (P3) | (P4) |
| (a-1) | | | 23% | 21% | 18% | 17% | 20% | 9% | 22% | 9% | 10% |
| (a-2) | Communic Acid-derived Resin Acid | | 3% | 0% | 3% | 2% | 3% | 0% | 3% | 0% | 0% |
| | Agathic Acid-derived Resin Acid | | 0% | 9% | 0% | 0% | 0% | 0% | 0% | 0% | 0% |
| (a-3) | Dihydroabietic Acid | | 21% | 20% | 16% | 28% | 41% | 33% | 5% | 59% | 28% |
| | Dihydroabietic Acid | | 36% | 31% | 32% | 33% | 34% | 30% | 0% | 31% | 38% |
| | Tetrahydroabietic Acid | | 17% | 19% | 31% | 20% | 2% | 28% | 0% | 1% | 24% |
| Other Resin Acid | | | 0% | 0% | 0% | 0% | 0% | 0% | 70% | 0% | 0% |
| Physical Properties | | Gardner Color | 1- | 1- | 1- | 1- | 1+ | 1- | 3 | 1 | 1- |
| | | Acid Value (mgKOH/g) | 169 | 183 | 170 | 167 | 171 | 168 | 171 | 175 | 169 |
| | | Softening Point (°C) | 77 | 81 | 78 | 79 | 83 | 78 | 80 | 85 | 77 |

**Table 3**

| | Example 1 | Example 2 | Example 3 | Example 4 | Example 5 | Comp. Example 1 | Comp. Example 2 | Comp. Example 3 | Comp. Example 4 | Comp. Example 5 |
|---|---|---|---|---|---|---|---|---|---|---|
| Base Resin | (A1) | (A2) | (A3) | (A4) | (A5) | (P1) | (P2) | (P3) | (P4) | (P5) Starting Material 5 |
| Over-time Stability of Flux for Solder Paste | 1 | 1 | 1 | 1 | 1 | 2 | 1 | 3 | 3 | 2 |
| Over-time Stability of Solder Paste | 1 | 1 | 1 | 1 | 1 | 3 | 2 | 3 | 3 | 2 |
| Adhesion of Solder Paste | 1 | 1 | 1 | 1 | 1 | 3 | 2 | 3 | 3 | 2 |
| Color of Flux Residue | 1 | 1 | 1 | 1 | 1 | 1 | 2 | 1 | 1 | 3 |

**Table 4**

| | Example 6 | Example 7 | Example 8 | Example 9 | Example 10 | Comp. Example 6 | Comp. Example 7 | Comp. Example 8 Example | Comp. Example 9 | Comp. Example 10 |
|---|---|---|---|---|---|---|---|---|---|---|
| Base Resin | (A1) | (A2) | (A3) | (A4) | (A5) | (P1) | (P2) | (P3) | (P4) | (P5) Starting Material 5 |
| Over-time Stability of Postflux | 1 | 1 | 1 | 1 | 1 | 2 | 1 | 3 | 3 | 2 |
| Soldering Properties | 1 | 1 | 1 | 1 | 1 | 1 | 1 | 1 | 2 | 1 |
| Color of Flux Residue | 1 | 1 | 1 | 1 | 1 | 1 | 2 | 1 | 1 | 3 |

The amounts of resin acids (% = wt%) shown in Tables 1 and 2 are values rounded off to the whole number except for the case where the value is 0%. 0% means that the amount was below measurable limits.

The results of Examples 1 to 5 revealed that the fluxes for solder paste containing component (A) as a base resin were excellent in stability over time, and the solder pastes containing such fluxes were also excellent in visco-stability over time and adhesion. The solder pastes also had excellent soldering properties (wettability), and the color tone and crack resistance of the flux residues were excellent as well.

In contrast, the results of Comparative Examples 1 and 3 to 5 revealed that despite containing component (a-3) in an amount of 50 wt% or more, when the base resins contained component (a-1) in an amount of less than 15 wt% and no component (a-2), the fluxes were poor in stability over time, and the solder pastes were poor in visco-stability and adhesion. Further, the color tone of the flux residue was not excellent in Comparative Example 5.

The results of Comparative Example 2 revealed that despite containing a predetermined amount of components (a-1) and (a-2), when the base resin contained component (a-3) in an amount below the predetermined amount, the solder paste was poor in visco-stability and adhesion, and the color tone was not excellent.

The results of Examples 6 to 10 revealed that the postfluxes containing component (A) as a base resin were excellent in stability over time. Further, the postfluxes, when used, showed excellent soldering properties (wettability), and the color tone of the flux residues was excellent.

In contrast, the results of Comparative Examples 6 and 8 to 10 revealed that despite containing component (a-3) in an amount of 50 wt% or more, when the base resins contained component (a-1) in an amount of less than 15 wt% and no component (a-2), the postfluxes were poor in stability over time. Further, the soldering properties (wettability) in Comparative Example 9 were poor, and the color tone of the flux residue in Comparative Example 10 was also poor.

Comparative Example 7 revealed that despite containing a predetermined amount of components (a-1) and (a-2), when the base resin contained component (a-3) in an amount below the predetermined amount, the color tone of the flux residue was poor.

## Claims

1. A base resin for a soldering flux, the base resin comprising a rosin (A) containing:
at least 15 wt% of a pimarane-type resin acid (a-1);
at least 1 wt% of a labdane-type resin acid (a-2); and
at least 50 wt% of an abietane-type resin acid that has no conjugated double bond (a-3).

2. The base resin for a soldering flux according to Claim 1 wherein the component (A) has a Gardner color of 2 or less.

3. A soldering flux comprising:
the base resin for a soldering flux according to Claim 1 or 2;
a flux solvent (B); and optionally an activator (C).

4. The soldering flux according to Claim 3 further comprising a thixotropic agent (D).

5. A solder paste comprising:
the soldering flux according to Claim 4; and
a solder powder.

6. A postflux comprising the soldering flux according to Claim 3.
